# EUROPÄISCHE PATENTSCHRIFT

(11) **EP 0 370 214 B1**
(45) Veröffentlichungstag und Bekanntmachung des Hinweises auf die Patenterteilung: **07.01.1993**
(21) Anmeldenummer: 89118557.1
(22) Anmeldetag: 06.10.1989
(51) Int. Cl.: C03B 7/02

(54) **Glaskanal**
Channel for molten glass
Canal de distribution de verre fondu

(30) Priorität: 22.11.1988 DE 3839346
(43) Veröffentlichungstag der Anmeldung: 30.05.1990
(73) Patentinhaber: BETEILIGUNGEN SORG GMBH & CO. KG, D-97816 Lohr am Main (DE)
(72) Erfinder: Bucar, Matjaz, D-8781 Karsbach (DE); Sorg, Helmut, D-8752 Glattbach (DE)
(74) Vertreter: Schulze Horn, Stefan, Dipl.-Ing. M.Sc.

(56) Entgegenhaltungen:
- US-A- 4 494 974
- US-A- 4 738 707

## Beschreibung

Die Erfindung betrifft einen Glaskanal, insbesondere zur Verwendung als Feeder, als Arbeitswanne und/oder als Verteilerkanal eines Glasschmelzofens, wobei der Glaskanal von innen nach außen aufeinander folgend einen die Glasschmelze führenden Trog sowie eine Trogabdeckung jeweils aus geeigneten Feuerfestmaterial, eine aus einzelnen Formkörpern gebildete Isolierung, eine diese wenigstens teilweise umgebende Außenverkleidung und eine den Glaskanal zumindest unterseitig und längsseitig abstützende Trägeranordnung umfaßt.

Glaskanäle der eingangs genannten Art werden bisher einstückig und an Ort und Stelle, d. h. z. B. in der Glashütte, aufgebaut, wobei typische Längen von etwa 10 bis 15 m erreicht werden, was zusammen mit dem hohen Gewicht des Kanals eine Transportierbarkeit ausschließt. Die die Lasten aufnehmende Trägeranordnung wird im allgemeinen als ein sogenanntes "Stahlboot" errichtet, in welches anschließend die Isolierungs- sowie Trog- und Trogabdekkungsteile in handwerklicher Arbeit eingebaut werden. Je nach Größe und Länge des Glaskanals beträgt die für dessen Errichtung erforderliche Arbeitszeit etwa zwei Wochen, bevor mit dem Auftempern des Glaskanals begonnen werden kann. Wird der Glaskanal schadhaft und erneuerungs- oder reparaturbedürftig, muß jeweils der Ofen für längere Zeit stillgesetzt werden. Dies hat große Produktionsausfälle zur Folge, die sich nachteilig auf das Betriebsergebnis des Ofenbetreibers auswirken. Ein weiterer Nachteil bei den herkömmlichen Glasschmelzkanälen ist, daß es beim Auftempern und im Betrieb des Kanals zu einem Durchlässigwerden von Fugen des Troges für die Glasschmelze kommen kann, so daß die Schmelze in die Isolierung strömen und diese teilweise unwirksam machen kann. Dies führt zu Produktionsbeeinträchtigungen, da das erschmolzene Glas eine verminderte Qualität hat und zu fehlerhaften Produkten führt. Wegen der einstückigen Bauweise des Glaskanals wird eine solche Undichtigkeit oft erst sehr spät erkannt und es kann nur sehr mühsam und unter aufwendiger Teilzerlegung des Kanals festgestellt werden, welche Fuge undicht geworden ist und einer erneuten Abdichtung bedarf.

Aus der US-PS 44 94 974 ist ein Glasvorherd bekannt, welcher aus zwei oder mehr Abschnitten besteht, die in Längsrichtung gesehen hintereinander angeordnet sind. Dabei unterscheiden sich die einzelnen Abschnitte hinsichtlich ihrer Isolationseigenschaften voneinander, was durch Verwendung unterschiedlicher Materialien für die einzelnen Teile des Glasvorherdes, nämlich Trog, Trogabdeckung und außenseitige Wärmeisolierung, erreicht wird. In seinen übrigen Eigenschaften, insbesondere in seinem mechanisch-konstruktiven Aufbau, entspricht dieser Glasvorherd herkömmlichen Konstruktionen; es muß also auch hier der gesamte Glasvorherd an Ort und Stelle in handwerklicher Arbeit errichtet werden. Damit weist auch dieser bekannte Glasvorherd die oben aufgeführten Nachteile auf.

Es stellt sich daher die Aufgabe, einen Glaskanal der eingangs genannten Art zu schaffen, der die aufgeführten Nachteile vermeidet und der insbesondere rationeller aufbaubar, abbaubar und reparierbar sowie betriebssicherer ist.

Die Lösung dieser Aufgabe gelingt erfindungsgemäß durch einen Glaskanal der eingangs genannten Art, welcher dadurch gekennzeichnet ist, daß er aus mehreren Kanalsegmenten zusammengesetzt ist, die jeweils entlang von im wesentlichen vertikal und quer zur Längsrichtung des Glaskanals verlaufenden Trennebenen aneinanderstoßen und die gegeneinander über Verbindungsmittel verspannbar sind.

Diese Segmentbauweise schafft die Möglichkeit, den Glaskanal in mehreren, jeweils für sich noch transportablen Einheiten außerhalb seines Aufstellungsortes weitestgehend vorzufertigen. Die vorgefertigten Kanalsegmente müssen dann lediglich noch zu ihrem Aufstellungsort, z. B. in eine Glashütte, transportiert und dort aufgestellt werden. Hierdurch werden die Stillstandszeiten von zugehörigen Glasschmelzöfen z. B. bei Erneuerung des Feeders auf etwa 1/10 der ursprünglichen Stillstandszeiten verkürzt. Entsprechend werden die Produktionsausfälle vermindert und die Betriebsergebnisse verbessert. Zudem können im Reparaturfall einzelne Kanalsegmente schnell und einfach ausgetauscht werden, was auch hier zu wesentlichen Zeit- und Kosteneinsparungen führt. Ein weiterer Vorteil ist der verbesserte Ausgleich von Dehnungsbewegungen und dadurch entstehenden mechanischen Spannungen innerhalb des Glaskanals bei dessen Auftempern vor dem Beschicken mit Glasschmelze. Dieser verbesserte Ausgleich wird dadurch erreicht, daß die Möglichkeit besteht, die im Vergleich zur Gesamtlänge des Glaskanals relativ kurzen Kanalsegmente erst nach dem Auftempern endgültig miteinander zu verbinden bzw. gegeneinander zu verspannen. Schließlich ist noch als Vorteil des neuen Glaskanals anzuführen, daß Teile der Kanalsegmente mehrfach verwendbar sind, da bei der erfindungsgemäßen Segmentbauweise zumindest eine teilweise Standardisierung möglich ist. Hierdurch werden Materialkosten eingespart und der Rohstoffverbrauch gemindert.

Vorteilhafte Weiterbildungen und Ausgestaltungen der Erfindung sind in den Unteransprüchen 2 bis 10 angegeben.

Ein Ausführungsbeispiel der Erfindung wird im folgenden anhand einer Zeichnung erläutert. Die Figuren der Zeichnung zeigen:
Figur 1 einen Glaskanal, bestehend aus mehreren Kanalsegmenten, in Seitenansicht,
Figur 2 ein Kanalsegment aus Figur 1, ebenfalls in Seitenansicht in vergrößerter und detaillierterer Darstellung,
Figur 3 das Kanalsegment aus Figur 2 im Querschnitt entlang der Linie III - III in Figur 2 und
Figur 4 den hinteren Teil des Glaskanals aus Fig. 1 im Längsschnitt, wobei die tragende Rahmenkonstruktion nicht dargestellt ist.

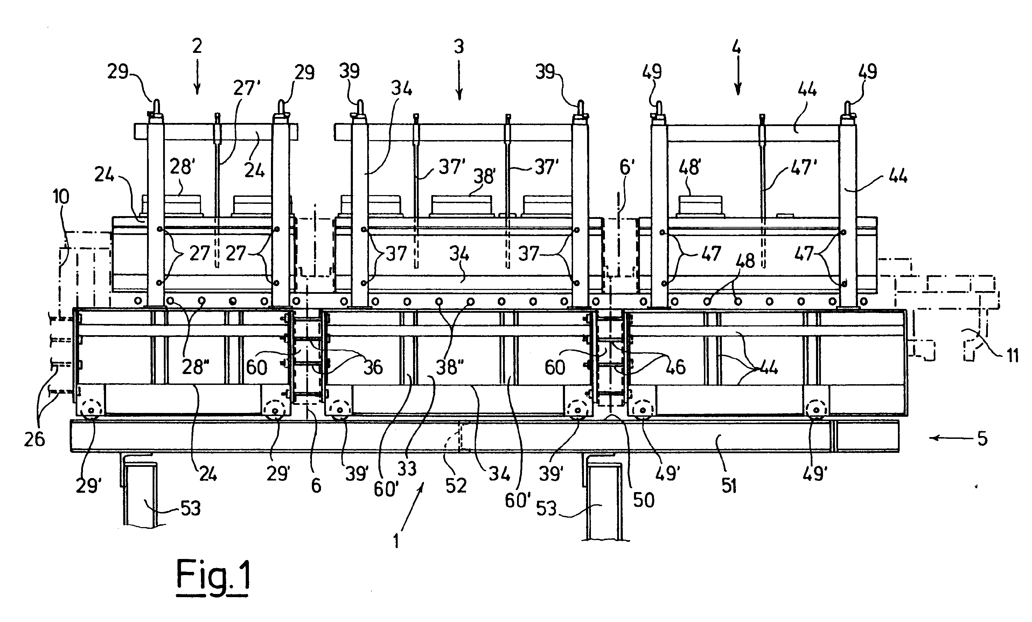

Wie die Figur 1 der Zeichnung zeigt, besteht das dargestellte Ausführungsbeispiel des Glaskanals 1 aus insgesamt drei Kanalsegmenten 2, 3 und 4, die hintereinander auf einer gemeinsamen Tragschienenanordnung 5 angeordnet sind. Das erste, d. h. in Figur 1 linke Kanalsegment 2 ist dabei als Anschluß-Kanalsegment für das Glasabgabeende eines nur andeutungsweise dargestellten Glasschmelzofens 10 ausgebildet. Das letzte, d. h. in Figur 1 rechte Kanalsegment 4 ist an seiner freien Stirnseite mit einem in gestrichelten Linien angedeuten Glasschmelzeauslauf 11 verbunden bzw. ausgestattet, welcher z. B. mit einer Glasverarbeitungsmaschine zur Herstellung von Flaschen oder sonstigen Glasgegenständen verbunden ist.

Im Bereich von im wesentlichen vertikal und quer zur Längsrichtung des Glaskanals 1 verlaufenden Trennebenen 6 und 6′ sind die Kanalsegmente 2 und 3 bzw. 3 und 4 stirnseitig miteinander verbunden und über Verbindungsmittel, hier Schraubbolzen 36 bzw. 46 gegeneinander verspannt. Weitere Verbindungsmittel 26, hier ebenfalls Schraubbolzen, dienen zur Verbindung des ersten Kanalsegments 2 mit dem Glasschmelzofen 10.

Alle Kanalsegmente 2, 3 und 4 besitzen eine eigene tragende Rahmenkonstruktion 24, 34 bzw. 44. Die jeweiligen Rahmen 24, 34 und 44 sind jeweils vorzugsweise aus Winkel-, T-, U- oder Doppel-T-Profilen aus Stahl gebildet. Dabei umfassen die Rahmen 24, 34 und 44 jeweils das zugehörige Kanalsegment 2, 3, 4 ober- und unter- sowie längsseitig. Im Inneren jedes Segmentes 2, 3, 4 ist ein Hohlraum zur Führung der Glasschmelze ausgebildet, der unterseitig durch einen Trog und oberseitig durch eine Trogabdeckung, jeweils aus einem geeigneten, z. B. schmelzflüssig gegossenem Feuerfestmaterial, gebildet ist, wobei diese Teile in der Figur 1 nicht sichtbar sind. Daran anschließend nach außen folgt eine Isolierung, die hier ebenfalls nicht sichtbar ist. Die genannten Teile werden innerhalb der einzelnen Segment 2, 3, 4 durch Spannbolzen 27, 37, 47 sowie Druckbolzen 27′, 37′, 47′ in ihrer Stellung relativ zueinander sowie zum Rahmen 24, 34, 44 gehalten. Dadurch wird auch während eines Transportes der einzelnen Segment 2, 3, 4 sichergestellt, daß alle Teile der Segmente 2, 3, 4 an ihrem vorgesehenen Platz bleiben, auch wenn relativ starke Beschleunigungs- und Erschütterungskräfte angreifen, wie sie z. B. bei einem Transport per Lkw auftreten. Die Spannbolzen 27, 37 und 47 verlaufen dabei in horizontaler Richtung von der Seite her durch Teile der Rahmen 24, 34 bzw. 44 und drücken von beiden Längsseiten der Segmente 2, 3, 4 her die zwischenliegenden Teile gegeneinander. Die Druckbolzen 27′, 37′ und 47′ laufen dagegen von oben her durch einen oberen Teil des Rahmens 24, 34 bzw. 44 und ragen in den oberen Teil der Isolierung innerhalb des jeweiligen Segmentes 2, 3, 4 hinein. Sie dienen insbesondere zur Sicherung des oberen Teils des betreffenden Segmentes 2, 3, 4 gegen Transportschäden. Im Betrieb des Glaskanals 1 können diese Druckbolzen 27′, 37′und 47′ gelockert oder ganz entfernt werden.

Weiterhin zeigt die Figur 1 bei jedem Segment 2, 3, 4 am oberen Ende des zugehörigen Rahmens 24, 34 bzw. 44 jeweils mehrere Anschlagösen 29, 39 bzw. 49, die zur Anbringung von Ketten oder Seilen dienen, mittels welcher das betreffende Segment 2, 3 oder 4 durch einen Kran angehoben und versetzt werden kann.

Unterseitig ist jedes der Segmente 2, 3, 4 mit Laufrollen 29′, 39′ bzw. 49′ ausgestattet, die paarweise an den Längsseiten des Segmentes 2, 3, 4 angeordnet sind und auf der Tragschienenanordnung 5 aufstehen. Hierzu besitzt die Tragschienenanordnung 5 eine oberseitige Lauffläche 50, auf der die Laufrollen 29′, 39′, 49′ abrollen können. Hierdurch wird zum einen der Aufbau des Glaskanals erleichtert, da die einzelnen Segmente 2, 3, 4 sehr einfach in die gewünschte Stellung verschoben werden können und es wird zum anderen die Möglichkeit eines reibungsarmen Dehnungsausgleichs beim Auftempern des Glaskanals 1 geschaffen.

Wie schon erwähnt, stoßen die einzelnen Segmente 2 und 3 bzw. 3 und 4 im Bereich von stirnseitigen Trennebenen 6 bzw. 6′ aneinander. In diesem Bereich ist vorteilhaft bei der Montage des Glaskanals 1 die Isolierung und Außenabdeckung zunächst ausgespart, um bessere Kontrollmöglichkeiten für den Vorgang des Auftemperns des Glaskanals 1 zu ermöglichen. Erst nach erfolgtem Auftempern werden die Segmente 2 und 3 bzw. 3 und 4 mittels der Verbindungsmittel 36 bzw. 46 mit der erforderlichen Anzugskraft mechanisch gegeneinander verspannt und im Umgebungsbereich der Trennebenen 6 und 6′ durch eine vorzugsweise eingestampfte Isoliermasse isoliert. Risse oder Fugenvergrößerungen können so kaum noch auftreten. Zum Schutz der eingestampften, den Bereich der Trennebenen 6 und 6′ ringförmig umgebenden Isoliermasse ist diese ihrerseits außenseitig von Druckplatten 60 eingefaßt. Zum Zweck einer Kontrolle der im Bereich der Trennebenen 6 und 6′ vorliegenden Fugen kann nach Entfernen der Trogplatten 60 das Isoliermaterial bzw. die eingestampfte Isoliermasse relativ leicht wieder entfernt werden. Nach erfolgter Kontrolle und gegebenenfalls Reparatur kann erneut Isoliermaterial eingebracht und festgestampft werden.

Da der Trog im allgemeinen über die Länge eines Segmentes 2, 3, 4 wiederum aus mehreren Teilstücken zusammengesetzt ist, treten auch innerhalb der Segmente 2, 3, 4 Trogfugen auf. Um einen möglichst einfachen späteren Zugang auch zu diesen Fugen zu ermöglichen, ist, wie aus Figur 1 ersichtlich ist, die Außenverkleidung 33 abschnittsweise ausgebildet und dabei im Bereich der innerhalb jedes Kanalsegments 2, 3, 4 vorliegenden Fugen unterbrochen. In gleicher Weise ist die Isolierung zunächst unterbrochen ausgeführt und später, d. h. insbesondere nach dem Auftempern des Glaskanals 1, mit eingestampfter Isoliermasse vervollständigt. Auch diese Isoliermasse ist durch Druckplatten 60′ abgedeckt und in ihrer Lage gesichert. Damit bleiben sämtliche Fugen, die im Verlauf des Trogs innerhalb des Glaskanals 1 auftreten, für spätere Inspektionen und Reparaturen leicht und schnell zugänglich.

Um eine gezielte Abkühlung der durch den Glaskanal 1 strömenden Glasschmelze zu ermöglichen, besitzen die Segmente 2, 3, 4 oberseitig jeweils Kühlöffnungen, welche mit je einem verschwenkbaren oder verschiebbaren Deckel 28′, 38′ bzw. 48′ abgedeckt sind. Weiterhin sind bei den einzelnen Segmenten 2, 3, 4 im Übergangsbereich zwischen dem unteren Teil und dem oberen Teil eine Anzahl von Einführungsöffnungen 28˝, 38˝ bzw. 48˝ vorgesehen, die zur Durchführung von Brennern, Thermoelementen oder dergleichen dienen. Die Einführungsöffnungen 28˝, 38˝ und 48˝ verlaufen in einer im wesentlichen horizontalen Richtung und enden im Inneren des Glaskanals vorzugsweise knapp oberhalb des Glasschmelzespiegels der darin geführten Glasschmelze.

Jedes der Segmente 2, 3, 4 ist aufgrund seiner Rahmenkonstruktion 24, 34 bzw. 44 in sich selbsttragend. Die gesamte Anordnung des Glaskanals 1, hier bestehend aus den drei Kanalsegmenten 2, 3, 4, ist jedoch nicht selbsttragend, sondern wird von der unterliegenden Tragschienenanordnung 5 getragen. Die Tragschienenanordnung 5 besteht hier aus einem Paar von parallel zueinander verlaufenden Längsträgern 51, von denen in der Figur 1 aufgrund der seitlichen Ansicht lediglich der vordere sichtbar ist. Zwischen den beiden Längsträgern 51 verlaufen in gewissen Abständen stabilisierende Querträger 52. Die Tragschienenanordnung 5 ihrerseits ruht auf mehreren Ständern 53, die mit ihrem unteren Ende beispielsweise fest einbetoniert sind und die an ihrem oberen Ende mit Mitteln zur Höheneinstellung der Tragschienenanordnung 5 ausgebildet sind.

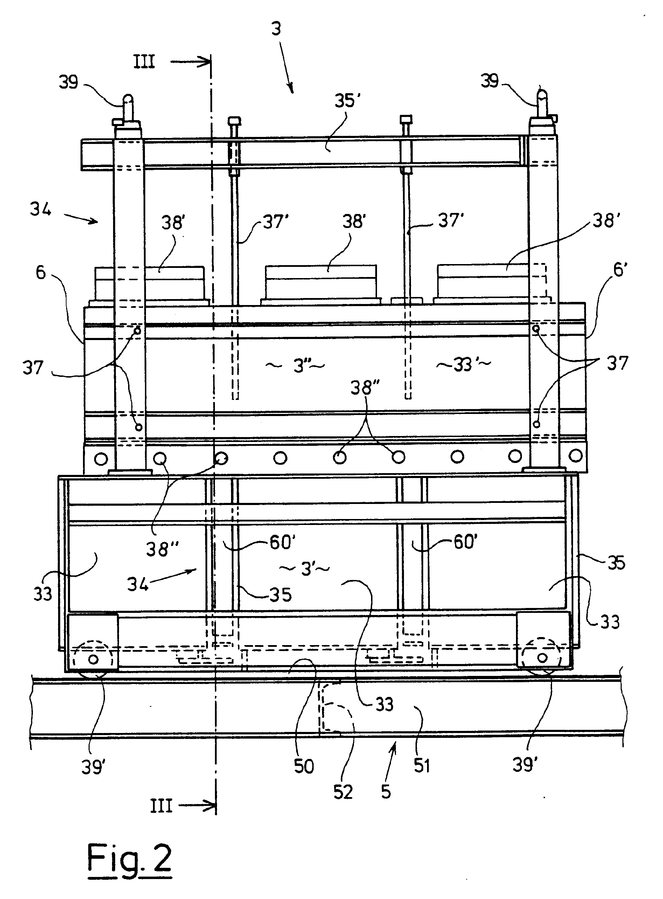

Figur 2 der Zeichnung zeigt das mittlere Kanalsegment 3 ebenfalls in Seitenansicht, jedoch in vergrößerter und detaillierterer Darstellung, wodurch der konstruktive Aufbau dieses Segmentes 3, das als Zwischen-Kanalsegment fungiert, deutlicher sichtbar wird. Das Kanalsegment 3 setzt sich aus einem Unterteil 3′ und einem Oberteil 3˝ zusammen, welche von dem gemeinsamen Rahmen 34 umfaßt und getragen werden. Der untere Rahmenteil 35 nimmt dabei den im Inneren des Segmentes 3 liegenden Trog mit der zugehörigen Isolierung und Außenverkleidung 33 auf, während der obere Rahmenteil 35′ die hier ebenfalls nicht sichtbare Trogabdeckung mit ihrer zugehörigen Isolierung und Außenverkleidung 33′ längsseitig sowie oberseitig umgibt. An der Längsseite des Kanalsegments 3 sind wieder die Spannbolzen 37 erkennbar, die durch die vertikal verlaufenden Teile des oberen Teils 35′ des Rahmens 34 geführt sind. Durch einen horizontal verlaufenden Träger des oberen Teils 35′ des Rahmens 34 sind die Druckbolzen 37′ geführt, welche mit ihrem unteren Ende in die Isolierung des Oberteils 3˝ des Kanalsegments 3 reichen.

Im Unterteil 3′ ist die Teilung der Außenverkleidung 33 in einzelne Abschnitte erkennbar, zwischen welchen jeweils eine der Druckplatten 60′ für die unterliegende, eingestampfte Isoliermasse der zugehörigen Trogfuge angeordnet ist.

Auf der Oberseite des Oberteils 3˝ des Kanalsegmentes 3 sind die Deckel 38′ für die Kühlöffnungen erkennbar. Auch die Durchführungsöffnungen 38˝ im mittleren Bereich der Längsseite des Kanalsegments 3 im Übergangsbereich zwischen dem Unterteil 3′ und dem Oberteil 3˝ sind hier wieder sichtbar.

Am oberen Ende jeweils vertikal verlaufender Teile des Rahmens 34 sind die Anschlagösen 39 erkennbar. An der Unterseite des Kanalsegments 3 sind die Laufrollen 39′ sichtbar, die zum Teil von Teilen des unteren Teils 35 des Rahmens 34 verdeckt sind.

Wie die Figur 2 weiterhin deutlich zeigt, sind die Stirnflächen des Kanalsegments 3 nicht durchgehend, sondern mit einem kleinen Rücksprung bzw. Vorsprung ausgeführt. Hierdurch wird eine günstigere Lastverteilung und Lastaufnahme bei miteinander verbundenen Segmenten erreicht.

Unterhalb des Kanalsegments 3 ist wieder die Laufschienenanordnung 5 sichtbar, von der wiederum der eine Längsträger 51 mit der oberseitigen Lauffläche 50 sowie einer der Querträger 52 erkennbar sind.

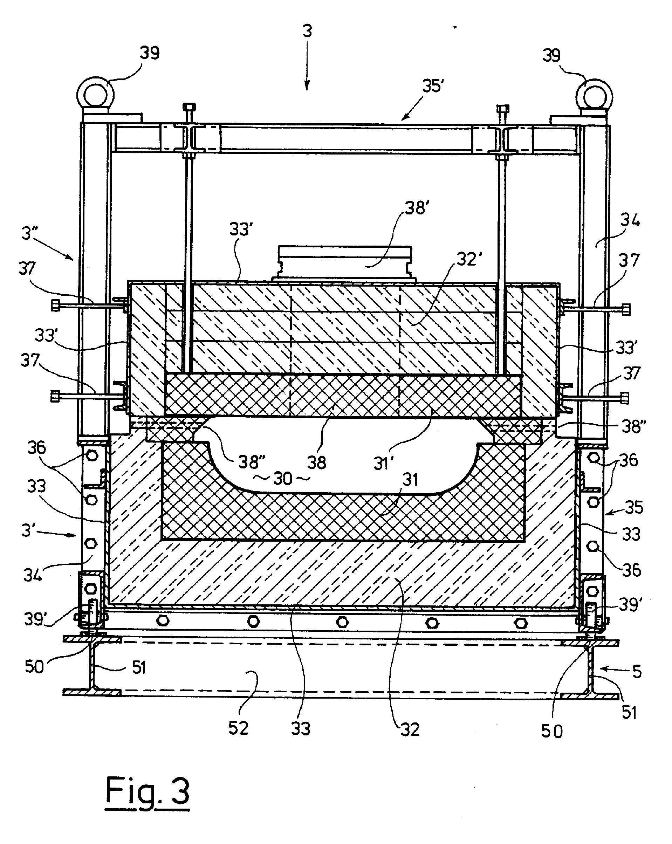

Der in Figur 3 gezeigte Querschnitt durch das Kanalsegment 3 entlang der Linie III - III in Figur 2 zeigt den inneren Aufbau des betreffenden Kanalsegments 3. Hierbei ist anzumerken, daß der innere Aufbau der anderen Kanalsegmente 2 und 4 weitestgehend identisch ist, soweit es nicht den unmittelbaren Anschlußbereich des Glasschmelzofens 10 bzw. des Glasauslaufes 11 betrifft.

Im Zentrum des Kanalsegments 3 ist ein flacher Hohlraum 30 erkennbar, der durch einen Trog 31 gebildet ist und zur Führung der Glasschmelze dient. Der Trog 31 aus Feuerfestmaterial ist nach oben hin durch eine Trogabdeckung 31′ abgedeckt. Zwischen dem Trog 31 und der Trogabdeckung 31′ sind randseitig kleinere Formkörper, ebenfalls aus Feuerfestmaterial, angeordnet. Unterhalb und seitlich des Troges 31 sowie oberhalb und seitlich der Trogabdeckung 31′ sind Isolierungen 32 bzw. 32′ angeordnet, die aus einzelnen Formkörpern, z. B. aus Schamotte, zusammengestellt sind. Nach außen hin werden die Isolierungen 32 und 32′ durch je eine Außenabdeckung 33 bzw. 33′ aus Stahlblech abgedeckt. Die Außenverkleidung 33 des Unterteils 3′ des Kanalsegments 3 ist dabei relativ stabil dimensioniert und in den unteren Teils 35 des tragenden Stahlrahmens 34 einbezogen. Im Bereich des Oberteils 3˝ des Kanalsegments 3 ist zwischen der oberen Außenverkleidung 33′ und dem diesen umgebenden oberen Teil 35′ des Rahmens 34 ein Freiraum vorhanden. In den seitlichen Teilen dieses Freiraums sind längs entlang der Außenverkleidung 33′ verlaufende Träger angeordnet, die von außen her mittels durch den Rahmen 34 geführter Spannbolzen 37 nach innen drückbar sind. Der Rahmen 34 ist hierzu zweckmäßig mit in horizontaler Richtung von außen nach innen verlaufenden Gewindebohrungen oder -hülsen ausgestattet. Mittels der Spannbolzen 37 werden die Trogabdeckung 31 sowie die zugehörigen Formkörper der Isolierung 32′ in sich gegeneinander verspannt, so daß sie sich ohne sonstige Verbindungsmittel praktisch wie ein einstückiger Körper verhalten.

Die von oben her in das Oberteil 3˝ geführten Druckbolzen 37′ dienen dazu, die Trogabdeckung 31′ nach unten in Richtung zum Trog 31 zu drücken und in fester Anlage an diesem bzw. den zwischengefügten Formkörpern zu halten. Hierdurch wird insbesondere verhindert, daß es beim Transport des Kanalsegments 3, z. B. auf einem Lkw, zu einem Verrutschen oder Lockern der einzelnen Teile des Oberteils 3˝ und Unterteils 3′ des Kanalsegments 3 kommt.

Zur Verstellung der Druckkraft der Druckbolzen 37′ können diese ebenfalls in Gewindebohrungen oder -hülsen im oberen Teil 35′ des Rahmens 34 verdreht werden. An ihrem äußeren Ende weisen sämtliche Spann- und Druckbolzen 37 und 37′ einen Sechskantkopf zum Ansetzen eines Schraubenschlüssels auf.

Durch das Oberteil 3˝ des Kanalsegments 3 erstreckt sich vom Hohlraum 30 für die Glasschmelze zur Oberseite des Kanalsegments 3 hin eine der Kühlöffnungen 38, deren Verlauf hier durch gestrichelte Linien angedeutet ist. An ihrem oberen Ende ist die Kühlöffnung 38, wie bereits erwähnt, mittels des Deckels 38′ abgedeckt und bei Bedarf freigebbar.

Im Übergangsbereich zwischen dem Trog 31 und der Trogabdeckung 31′, genauer in den zwischen diesen beiden angeordneten kleineren Formkörpern sind die Einführungsöffnungen 38˝ vorgesehen, die zur Durchführung von Brennern, Thermoelementen und dergleichen dienen.

Im unteren Teil der Längsseiten sowie im Bereich der Unterseite des Kanalsegments 3 sind die stirnseitigen Teile des Rahmens 34, genauer dessen unteren Teils 35, flanschartig ausgebildet und mit in regelmäßigen Abständen angeordneten Bohrungen zur Durchführung der Befestigungsmittel 36, hier Gewindebolzen, versehen, welche zur Verbindung des Segmentes 3 mit einem Nachbarsegment dienen.

Am oberen Ende des oberen Teils 35′ des Rahmens 34 sind wieder die Anschlagösen 39 angebracht; am entgegengesetzten unteren Ende des Kanalsegments 3 sind wieder die Laufrollen 39′ angebracht.

Diese Laufrollen 39′ können auf der Lauffläche 50 der Längsträger 51 der tragenden Tragschienenanordnung 5 ablaufen. In Querrichtung sind die beiden Längsträger 51 der Tragschienenanordnung 5 durch den Querträger 52 miteinander verbunden.

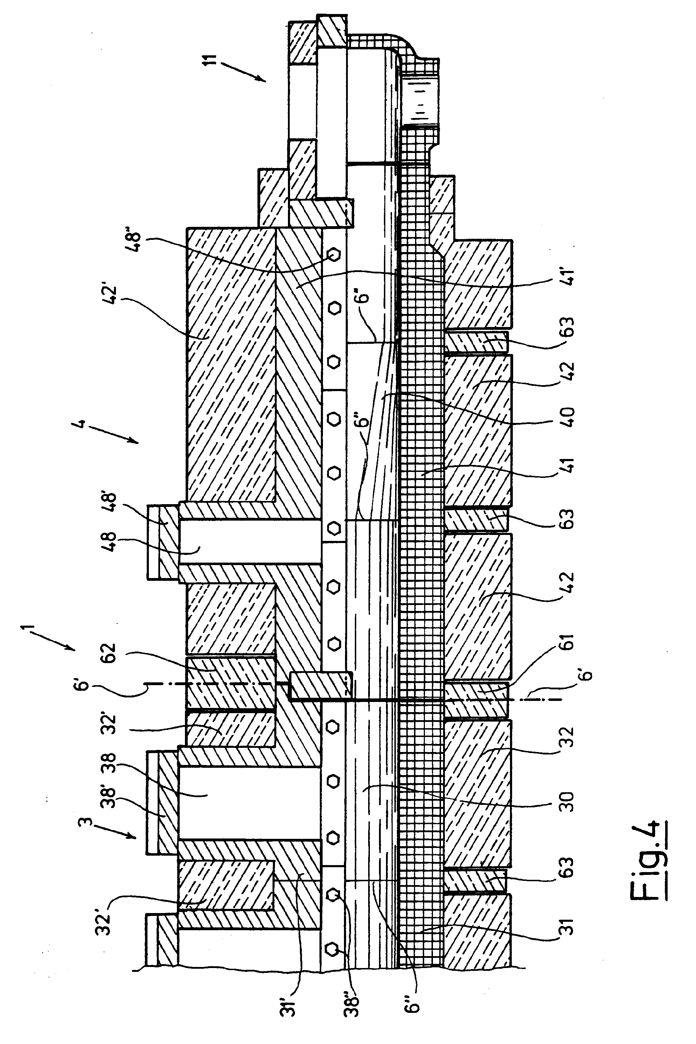

Figur 4 schließlich zeigt einen Teil-Längsschnitt in einer vertikalen Ebene durch den Glaskanal 1, wobei der Schnitt durch das Kanalsegment 4 sowie einen Teil des Kanalsegments 3 verläuft. Zur Wahrung einer übersichtlichen Darstellung sind in der Figur 4 Rahmen und Verkleidung des Glaskanals 1 nicht dargestellt. Die Kanalsegmente 3 und 4 stoßen, wie schon beschrieben, entlang der im wesentlichen vertikal verlaufenden Trennebene 6′ aneinander. Der im Kanalsegment 3 gelegene Teil des Troges 31 und der im Kanalsegment 4 gelegene Teil des Troges 41 für die Glasschmelze stoßen dabei ebenfalls in der Ebene 6′ miteinander fluchtend aneinander an. Die in diesem Bereich zwangsläufig vorliegende Fuge im Verlauf des Troges 31, 41 ist nach unten hin durch eine eingestampfte Isoliermasse 61 abgedeckt. Im oberen Teil ist die Fuge im Bereich der Trennebene 6′ oberhalb der ebenfalls aneinanderstoßenden Trogabdeckungen 31′ und 41′ durch eben falls eingestampfte Isoliermasse 62 abgedeckt. Die Isoliermassen 61 und 62 bilden einen umlaufenden Ring um den Trog 31, 41 und die Trogabdeckung 31′, 41′. Die Isoliermassen 61 und 62 werden durch die zuvor erwähnten, in Figur 4 nicht eigens dargestellten Druckplatten in ihrer Lage gehalten.

Die im Inneren jedes Segmentes 3, 4 vorliegenden Fugen im Verlauf des Troges 31 bzw. 41 sind in der Figur 4 mit der Bezugsziffer 6˝ bezeichnet. Im Bereich dieser Fugen ist die Isolierung nach unten hin ebenfalls durch eingestampfte Isoliermasse 63 gebildet. Zwischen den Bereichen, in denen die Isoliermasse 61, 62 und 63 eingestampft ist, befinden sich die zuvor schon erwähnten Isolierungen 32 und 32′ bzw. 42 und 42′, die aus in sich starren Formkörpern gebildet sind. Das Einstampfen der Isoliermassen 61, 62 und 63 erfolgt vorzugsweise nach dem Auftempern des Glaskanals 1, so daß Dehnungen im Bereich der Trennebenen 6′ bzw. der Fugen 6˝ sich nicht auf die Dichtigkeit und Funktionsfähigkeit der Isolierung insgesamt auswirken können. Die eingestampften Fugenmassen 61, 62 und 63 können nach Abnehmen der entsprechenden Abdeckungen bzw. Druckplatten leicht entfernt werden, um Inspektionen oder Reparaturen im Bereich der Trennebenen 6′ bzw. Fugen 6˝ vornehmen zu können.

Im übrigen zeigt die Figur 4 bereits früher erläuterte Teile des Glaskanals 1. So bilden die Teile des Troges 31 und 41 den durchgehenden Hohlraum 30, 40, durch welchen die Glasschmelze zum im rechten Teil der in Figur 4 sichtbaren Glasauslauf 11 strömt. Oberhalb des Hohlraums 30, 40 sind die Einführungsöffnungen 38˝ bzw. 48˝ für die erwähnten Elemente, wie Heizstäbe und dergleichen, sichtbar. Nach oben hin wird der Trog 31, 41 durch die Trogabdeckung 31′, 41′ begrenzt. An diesen schließt sich nach außen bzw. oben wieder die zugehörige Isolierung 32′ bzw. 42′ an. Im Verlauf des Glaskanals 1 sind weiterhin mehrere Kühlöffnungen 38, 48 erkennbar, die jeweils durch einen Deckel 38′ bzw. 48′ abgedeckt sind.

In dem vorliegenden Ausführungsbeispiel ist der Glaskanal 1 aus lediglich drei Kanalsegmenten 2, 3, 4 zusammengesetzt, um die Übersichtlichkeit der Darstellung zu wahren. In der Praxis sind selbstverständlich auch größere Zahlen von Kanalsegmenten, z. B. vier bis acht, denkbar.

## Patentansprüche

1. Glaskanal (1), insbesondere zur Verwendung als Feeder, als Arbeitswanne und/oder als Verteilerkanal eines Glasschmelzofens, wobei der Glaskanal von innen nach außen aufeinander folgend einen die Glasschmelze führenden Trog (31) sowie eine Trogabdeckung jeweils (31′) aus geeignetem Feuerfestmaterial, eine aus einzelnen Formkörpern gebildete Isolierung (32), eine diese wenigstens teilweise umgebende Außenverkleidung (33) und eine den Glaskanal zumindest unterseitig und längsseitig abstützende Trägeranordnung (5) umfaßt, dadurch gekennzeichnet, daß der Glaskanal (1) aus mehreren Kanalsegmenten (2, 3, 4) zusammengesetzt ist, die jeweils entlang von im wesentlichen vertikal und quer zur Längsrichtung des Glaskanals (1) verlaufenden Trennebenen (6, 6′) aneinanderstoßen und die gegeneinander über Verbindungsmittel (26, 36, 46) verspannbar sind.

2. Glaskanal nach Anspruch 1, dadurch gekennzeichnet, daß das erste und das letzte Kanalsegment (2; 4) als ofen- bzw. verarbeitungsmaschinenspezifisches Anschluß-Kanalsegment ausgebildet sind und daß zwischen den beiden Anschluß-Kanalsegmenten (2; 4) ein weiteres oder mehrere weitere, untereinander identische oder in Teilen identische Zwische-Kanalsegmente (3) angeordnet sind.

3. Glaskanal nach den Ansprüchen 1 und 2, dadurch gekennzeichnet, daß je Kanalsegment (2, 3, 4) die Trägeranordnung als das Segment (2, 3, 4) ober-, unter-sowie längsseitig umfassende Rahmenkonstruktion (24, 34, 44) ausgebildet ist und daß die Verbindungsmittel (26, 36, 46) an einander gegenüberliegenden Rahmenteilen jeweils zweier benachbarter Kanalsegmente (2, 3; 3, 4) angreifen.

4. Glaskanal nach den Ansprüchen 1 bis 3, dadurch gekennzeichnet, daß jedes Kanalsegment (2, 3, 4) ein Unterteil (3′) mit dem Trog (31) sowie einer zugehörigen Isolierung (32) und Außenverkleidung (33) und ein Oberteil (3˝) mit Trogabdeckung (31′) sowie einer zugehörigen Isolierung (32′) und Außenverkleidung (33′) aufweist und daß das Oberteil (3˝) mittels seitlich angreifender, seitlich am Rahmen (34) abgestützter Spannbolzen (37) in sich sowie mittels von oben angreifender, oben am Rahmen (34) abgestützter Druckbolzen (37′) gegen das Unterteil (3′) verspannbar ist.

5. Glaskanal nach den Ansprüchen 1 bis 4, dadurch gekennzeichnet, daß die Außenverkleidungen (33, 33′) und Isolierungen (32, 32′) im Abstand von den Trennebenen (6, 6′) enden, daß die im Bereich der Trennebenen (6, 6′) vorliegenden Fugen des Trogs (31) und der Trogabdeckung (31′) nach außen hin durch je einen Ring aus nach einem Auftempern des Glaskanals (1) eingestampfter Isoliermasse (61, 62) umgeben sind und daß der Ring seinerseits außenseitig von Druckplatten (60) eingefaßt ist.

6. Glaskanal nach den Ansprüchen 1 bis 5, dadurch gekennzeichnet, daß die Außenverkleidungen (33, 33′) und Isolierungen (32, 32′, 42, 42′) jedes Kanalsegments (2, 3, 4) abschnittsweise ausgebildet und dabei im Bereich von innerhalb der Kanalsegmente (2, 3, 4) vorliegenden Fugen (6˝) des Trogs (31, 41) unterbrochen sind und daß die innerhalb der Kanalsegmente (2, 3, 4) vorliegenden Fugen (6˝) des Trogs (31, 41) nach außen hin durch je eine Lage einer eingestampften Isoliermasse (63) abgedeckt sind, die ihrerseits außenseitig von Druckplatten (60′) eingefaßt ist.

7. Glaskanal nach den Ansprüchen 1 bis 6, dadurch gekennzeichnet, daß jedes Kanalsegment (2, 3, 4) in sich selbsttragend ausgebildet und unterseitig oder seitlich mit Gleitkufen oder Laufrollen (29′, 39′, 49′) versehen ist und daß mehrere Kanalsegmente (2, 3, 4) hintereinander auf eine gemeinsame, als tragende Unterkonstruktion ausgebildete Tragschienenanordnung (5) aufgesetzt sowie auf dieser in horizontaler Richtung bewegbar sind.

8. Glaskanal nach den Ansprüchen 1 bis 7, dadurch gekennzeichnet, daß wenigstens einzelne Kanalsegmente (2; 3; 4) ihr Oberteil (3′) durchsetzende, oberseitig mit verschiebbaren oder verschwenkbaren Deckeln (38′) versehene Kühlöffnungen (38) aufweisen.

9. Glaskanal nach den Ansprüchen 1 bis 8, dadurch gekennzeichnet, daß wenigstens einzelne Kanalsegmente (2; 3; 4) seitliche, einen Übergangsbereich zwischen dem Unterteil (3′) und dem Oberteil (3˝) durchsetzende Einführungsöffnungen (28˝, 38˝, 48˝) für Brenner, Heizstäbe, Heizelektroden und/oder Thermoelemente aufweisen.

10. Glaskanal nach den Ansprüchen 1 bis 9, dadurch gekennzeichnet, daß jedes Kanalsegment (2, 3,4 ) oberseitig an seinem Rahmen (24, 34, 44) Anschlagösen oder -laschen (29, 39, 49) zum Anbringen von Hubmitteln, wie Seile oder Ketten, aufweist.

## Claims

1. Glass channel (1) especially for use as a feeder, as a working trough and/or as a distribution channel for a glass melting furnace, whereby the glass channel comprizes - listing parts in sequence from the inside to the outside - of a trough (31) conducting the molten glass, a trough cover (31′), both of which are composed of a fireproof material, a means of isolation (32) shaped by a number of moulding bodies, an other sheathing (33), which at least partly envelopes these, and a device comprizing bearing elements (5) supporting the rest at least laterally and on the underside,
characterized in that
the glass channel (1) is composed of several channel segments (2, 3, 4) that each abut on one another along parting planes (6, 6) running more or less vertically and transversely to the length of the glass channel (1). They can be braced aginst one another through connecting means (26, 36, 46).

2. Glass channel according to claim 1,
characterized in that
the first and the last segments (2; 4) are constructed as channel segments to connect respectively with the glass melting furnace or glass processing machinery and that between the two connector channel segments (2; 4) a further, or several further, identical or in part identical, intermediate channel segments (3) are arranged.

3. Glass channel according to claims 1 and 2 ,
characterized in that
each channel segment (2, 3, 4) is furnished with a supporting device in the form of a frame construction (24, 34, 44) that enveloppes the segment (2, 3, 4) above, below and at the sides and that the means of connection (26, 36, 46) link in each case two neighbouring channel segments (2, 3; 3, 4) at parts of their frame construction lying opposite each other.

4. Glass channel according to claims 1 to 3,
characterized in that
each channel segment (2, 3, 4) is furnished with a lower part (3′) with a trough (31) and its corresponding means of isolation (32) and an outer sheathing (33) and an upper part (3˝) with its trough covering (31′), its corresponding means of isolation (32′) and that the upper part (3˝) can be braced against the lower part (3′) by means of a pulling bolt (37) engaging from the side and supported at this side by the supporting frame (34) and a setbolt (37′) engaging from above and supported by the frame (34).

5. Glass channel according to the claims 1 to 4,
characterized in that
the outer sheathing (33, 33′) and the means of isolation (32, 32′) end at a distance from the parting planes (6, 6′), that the outside parts of the seams of the trough (trough) and (31′) of the trough cover (31′) in the area of the parting planes (6, 6′) are sealed with a ring of isolation compound (61, 62) tamped down after the heating-up of the glass channel (1) and that the ring, in its turn, is envelopes on the outside by pressure plates (60).

6. Glass channel according to claims 1 to 5,
characterized in that
the outer sheathing (33, 33′) and means of isolation (32, 32′, 42, 42′) of each channel segment are formed in sections and that the seams (6˝) in the area of the trough (31, 41) within the channel segments (2, 3, 4) are discontinuous and thereby covered from the outside with a layer of tamped isolation compound, that is, in its turn, held in place from the outside by means of pressure plates (60′).

7. Glass channel according to claims 1 to 6,
characterized in that
each channel segment (2, 3, 4) is designed to be integral and is furnished on the underside with skids or castors (29′, 39′, 49′) and that several channel segments (2, 3, 4), one after the other, are placed on a common bearing beam (5) constructed in the form of a load bearing sub-construction, upon which the channel segments (2, 3, 4) are horzontally moveable.

8. Glass channel according to claims 1 to 7,
characterized in that
at least the upper parts (3′) of some of the glass segments (2, 3, 4) are furnished with ports for cooling (38) extending into the trough and covered on the outside with a swingable or sliding lid (38′).

9. Glass channel according to claims 1 to 8,
characterized in that
at least some of the channel segments (2, 3, 4) are fitted with inlet ports (28˝, 38˝, 48˝) in the transitional area between the lower part (3′) and the upper part (3˝) at the sides, through which burners, heating rods, electrodes for heating and/or thermometers can be introduced.

10. Glass channel according to claims 1 to 9,
characterized in that
each channel segment (2, 3, 4) has attached to the top side of the frame sling eyes or brackets (29, 39, 49) for fixing means of lifting, such as cables or chains .

## Revendications

1. Canal de distribution de verre fondu (1), destiné en particulier à être utilisé comme chargeur, comme cuve de travail et/ou comme canal de distribution d'un four de fusion de verre, ce canal de distribution de verre fondu se composant, en succession de l'intérieur vers l'extérieur, d'une goulotte (31) conduisant à la masse de verre fondu, ainsi que d'un couvercle de goulotte (31′), tous deux en un matériau réfractaire approprié, une isolation (32) constituée d'éléments individuels en forme, d'un revêtement extérieur (33) entourant au moins partiellement cette dernière et une structure de support (5) soutenant ledit canal de distribution au moins par sa face inférieure et par ses faces longitudinales, caractérisé en ce que le canal de distribution (1) est composé de plusieurs segments de canal (2, 3, 4) qui sont tous limitrophes selon des plans de séparation (6, 6′) qui sont chacun sensiblement verticaux et perpendiculaires à la direction longitudinale du canal de distribution (1), et qui sont pressés l'un contre l'autre grâce à des moyens de liaison (26, 36, 46).

2. Canal de distribution selon la revendication 1, caractérisé en ce que le premier et le dernier segment de canal (2, 4) sont réalisés comme segments de canal de raccordement à un four et à une machine de façonnage spécifiques et en ce qu'entre les deux segments de canal de raccordement (2, 4) sont disposés un autre ou plusieurs autres segments de canal intermédiaires (3) identiques totalement ou partiellement entre eux.

3. Canal de distribution selon les revendications 1 et 2, caractérisé en ce que pour chaque segment de canal (2, 3, 4), la structure de support est réalisée comme le bâti (24, 34, 44) entourant par ses faces supérieure, inférieure, ainsi que longitudinales, le segment (2, 3, 4) et en ce que les moyens de liaison (26, 36, 46) sont en prise avec les éléments de bâti qui font partie de chaque paire de segments (2, 3; 3, 4) adjacents et qui se font face.

4. Canal de distribution selon les revendications 1 à 3, caractérisé en ce que chaque segment de canal (2, 3, 4) comporte une partie inférieure (3′) avec la goulotte 31) ainsi qu'une isolation correspondante (32) et un revêtement extérieur (33), et une partie supérieure (3˝) avec un couvercle de goulotte (31′) ainsi qu'une isolation correspondante (32′) et un revêtement extérieur (33′), et en ce que la partie supérieure (3˝) est serrable contre la partie inférieure (3′) au moyen de boulons de tension (37) accrochés latéralement et supportés latéralement par le bâti (34), ainsi qu'au moyen de boulons de compression (37′) accrochés par le haut et supportés en haut par le bâti (34).

5. Canal de distribution selon les revendications 1 à 4, caractérisé en ce que les revêtements extérieurs (33, 33′) et les isolations (32, 32′) se terminent à distance des plans de séparation (6, 6′) entre la goulotte (31) et le couvercle de goulotte (31′) sont entourés chacun vers l'extérieur par un anneau de matériau isolant (61, 62) introduit à force après mise en température du canal de distribution (1) et en ce que l'anneau de son côté est entouré sur sa face extérieure par des plaques de compression (60).

6. Canal de distribution selon les revendications 1 à 5, caractérisé en ce que les revêtements extérieurs (33, 33′) et les isolations (32, 32′, 42, 42′) de chaque segment de canal (2, 3, 4) sont réalisés sous forme de sections et sont en outre interrompus dans la région des joints (6˝) de la goulotte (31, 41) existant à l'intérieur des segments de canal (2, 3, 4) et en ce que les joints (6˝) de la goulotte (31, 41) existant à l'intérieur des segments de canal (2, 3, 4) sont recouverts chacun vers l'extérieur par une couche de matériau isolant (63) introduit à force, laquelle de son côté est entourée sur sa face extérieure par des plaques de compression (60′).

7. Canal de distribution selon les revendications 1 à 6, caractérisé en ce que chaque segment de canal (2, 3, 4) est autoporteur et est muni sur sa face inférieure ou latéralement, de patins de glissement ou de galets de roulement (29′, 39′, 49′) et en ce que plusieurs segments de canal (2, 3, 4) sont posés sur un ensemble commun de rails porteurs (5) réalisé comme une infrastructure porteuse et sont déplaçables horizontalement sur celle-ci.

8. Canal de distribution selon les revendications 1 à 7, caractérisé en ce qu'au moins un des segments de canal (2, 3, 4) comporte des ouvertures de refroidissement (38) traversant sa partie supérieure (3′) et munies de couvercles (38′) coulissants ou basculants.

9. Canal de distribution selon les revendications 1 à 8, caractérisé en ce qu'au moins un des segments de canal (2, 3, 4) comporte des ouvertures (28˝, 38˝, 48˝) d'entrées latérales traversant une région de transition entre la partie inférieure (3′) et la partie supérieure (3˝) pour des brûleurs, des résistances électriques, des électrodes chauffantes et/ou des thermocouples.

10. Canal de distribution selon les revendications 1 à 9, caractérisé en ce que chaque segment de canal (2, 3, 4) comporte sur la face supérieure de son bâti (24, 34, 44) des anneaux ou attaches d'amarrage (29, 39, 49) pour l'adjonction de moyens de levage, tels des chaînes ou des câbles.
